# EUROPÄISCHE PATENTANMELDUNG

(11) **EP 2 047 753 A2**
(43) Veröffentlichungstag der Anmeldung: **15.04.2009**
(21) Anmeldenummer: 08165888.2
(22) Anmeldetag: 06.10.2008
(51) Int. Cl.: A22C 17/00, B65B 25/08, B65B 41/12, B65B 35/10, B65B 61/04

(54) **Verfahren und Vorrichtung zum Zuordnen von Verpackungsmaterial**

(30) Priorität: 05.10.2007 DE 102007048047
(71) Anmelder: VEMAG Maschinenbau GmbH, 27283 Verden/Aller (DE)
(72) Erfinder: Weller, Frank, 27283 Verden (DE); Knodel, Peter, 28876 Oyten (DE); Walter, Heiko, 27337 Intschede-Reer (DE)
(74) Vertreter: Eisenführ, Speiser & Partner

(57) **Zusammenfassung**

Die vorliegende Erfindung betrifft ein Verfahren zum Zuordnen von Verpackungsmaterial, insbesondere Papier, portionierten Lebensmitteln mit den Schritten: Zufuhr von Portionen eines Lebensmittels auf ein erstes Förderband, Zufuhr und Zuordnung von Verpackungsmaterial zu den Portionen, **dadurch gekennzeichnet, das**s das Verpackungsmaterial ohne vorheriges Trennen dem ersten Förderband zugeführt und den Portionen zugeordnet wird, und dass das Verpackungsmaterial anschließend zwischen zwei Portionen getrennt wird. Die Erfindung betrifft weiterhin eine entsprechende Vorrichtung.

## Beschreibung

Die vorliegende Erfindung betrifft ein Verfahren zum Zuordnen von Verpackungsmaterial, insbesondere Papier, zu portionierten Lebensmitteln mit den Schritten: Zufuhr von Portionen eines Lebensmittel auf ein erstes Förderband, und Zufuhr und Zuordnung von Verpackungsmaterial zu den Portionen. Die Erfindung betrifft weiterhin eine Vorrichtung zum Zuordnen von Verpackungsmaterial, insbesondere Papier, zu portionierten Lebensmitteln, mit einem Förderband zur Aufnahme und Förderung von Portionen eines Lebensmittels, und Mitteln zur Förderung und Zuordnung von Verpackungsmaterial zu den Portionen.

Hersteller von Lebensmitteln übernehmen zunehmend weiterverarbeitende Schritte in ihre Produktionskette, um der Nachfrage des Einzelhandels nach vorgefertigten bzw. zur Endverarbeitung vorbereiteten Lebensmitteln nachzukommen. Hierzu zählt insbesondere auch das Portionieren von Lebensmitteln und Verpacken der Portionen auf eine anwenderfreundliche Art und Weise. Insbesondere in der fleischverarbeitenden Industrie wird beispielsweise Hackfleisch zum Zubereiten von Hamburgern oder ähnlichen Produkten schon während der Fertigung in Einzelportionen (Patties) unterteilt.

Damit der Endverbraucher die einzelnen Portionen unbeschädigt aus Ihrer Verpackung entnehmen und der Endverarbeitung zuführen kann, müssen die einzelnen Portionen leicht voneinander trennbar in ihrer Verpackung angeordnet sein.

Eine etablierte Methode, die Portionen trennbar zu verpacken, ist die, dass zwischen die einzelnen Portionen Verpackungsmaterial, insbesondere Kunststoff-oder Papierfolie gebracht wird, um ein Aneinanderkleben der Portionen zu verhindern. Bekannte Vorrichtungen führen diesen Arbeitsschritt aus, in dem Verpackungsmaterial in einzelne Abschnitte zerteilt wird, und diese einzelnen Abschnitte anschließend unter bereits geformte Lebensmittelportionen geschoben werden oder die Lebensmittelportionen werden darüber geschoben.

Dieses getaktete Unterlegen der ansonsten bereits fertigen Produkte erfordert eine genaue Synchronisation der Einzelblattförderung mit der Förderung der Produkt-Portionen. Das bringt den Nachteil mit sich, dass Vorrichtungen der eingangs genannten Art eine aufwendige Konstruktion aufweisen und kostenintensiv in der Anschaffung und Wartung sowie entsprechend langsam sind.

Aufgabe der vorliegenden Erfindung ist es demzufolge, ein Verfahren und eine Vorrichtung zum Zuordnen von Verpackungsmaterial, insbesondere Papier, zu portionierten Lebensmitteln anzugeben, die den Kostenaufwand für automatisierte Verpackungsarbeiten der vorgenannten Art verringern.

Die vorliegende Erfindung löst die Aufgabe durch ein Verfahren der eingangs genannten Art, in welchem das Verpackungsmaterial ohne vorheriges Trennen dem ersten Förderverband zugeführt und den Portionen zugeordnet wird, und das Verpackungsmaterial anschließend zwischen zwei Portionen getrennt wird.

Ein besonderer Vorteil der erfindungsgemäßen Verfahrens ist, dass die Zufuhr des Verpackungsmaterials auf das erste Förderband kontinuierlich erfolgen kann, und ein Takten der Verpackungsmaterial-Zufuhr nicht notwendig ist. Auf Antriebsmittel wie beispielsweise intermittierend angetriebene Walzenpaare, welche in vorbekannten Vorrichtungen zum vorherigen Trennen und beschleunigen des Verpackungsmaterials eingesetzt werden, kann verzichtet werden. Das Zuordnen der Lebensmittelportionen zu unzertrenntem Verpackungsmaterial erhöht weiterhin beträchtlich die Flexibilität des erfindungsgemäßen Verfahrens im Hinblick auf die Art und Größe der verarbeiteten Portionen.

Das erfindungsgemäße Verfahren wird weitergebildet durch Unterlegen der Portionen mit Verpackungsmaterial, insbesondere Papier, welches als ein Endlosband von einer Rolle aufgenommen und gefördert wird, und welches mittels Trennmitteln durchtrennt wird. Obwohl grundsätzlich verschiedene Arten der Zuordnung von Verpackungsmaterial zu den Lebensmittelportionen möglich sind, beispielsweise das Bedecken der Portionen mit Verpackungsmaterial, oder Umhüllen der Portionen damit, erscheint das Unterlegen der Portionen mit Verpackungsmaterial als technisch einfach und mit geringem Bauteilaufwand zu erreichende Ausführungsform. Als Trennmittel kommt vorzugsweise ein elektrisch angetriebenes Trennmesser zum Einsatz, welches im Betrieb oberhalb der Förderbänder angeordnet ist, die seitliche Anordnung oder eine Anordnung unterhalb der Förderbänder kann allerdings im Hinblick auf die räumlichen Gegebenheiten oder die Auslegung einer Anlage, mit welcher das erfindungsgemäße Verfahren betrieben wird, in Betracht gezogen werden. Als weitere Trennmittel können Verfahren wie beispielsweise das Wasserstrahlschneiden oder das Schneiden mittels Lasertechnik in Abhängigkeit vom Anwendungsfall und vom Verpackungsmaterial vorteilhaft sein.

In einer weiteren Ausführungsform des erfindungsgemäßen Verfahrens erfolgt der Abtransport der unterlegten Portionen mittels eines zweiten Förderbandes zur weiteren Verarbeitung. Weitere Verarbeitungsschritte, die sich dem Unterlegen der Lebensmittelportionen anschließen können, betreffen beispielsweise das Färben, Formen, Kühlen oder Erhitzen der Portionen. Es können sich ebenfalls weitere Verpackungsschritte wie z.B. Stapeln oder Einschweißen anschließen.

In einer weiteren Ausführungsform der Erfindung werden die Portionen auf das von dem ersten Förderband geförderte Verpackungsmaterial, etwa mit Hilfe einer Füllmaschine, aufgegeben. Da die einzelnen Portionen somit schon zu Beginn des Verarbeitungs-Verfahrens mit Verpackungsmaterial unterlegt sind, ist die weitere Handhabung der Portionen für anschließende Verarbeitungsschritte deutlich erleichtert.

Gemäß einer vorteilhaften Weiterbildung des erfindungsgemäßen Verfahrens erfolgt das Trennen durch die Trennmittel an einem Übergangs-Abschnitt zwischen dem ersten und einem zweiten Förderband. Der zwischen den beiden Förderbändern verbleibende Spalt kann auf diese Weise für einen Durchgang der Trennmittel zwischen den beiden Förderbändern genutzt werden. Für den Fall, dass die Trennmittel durch ein Trennmesser ausgebildet sind, kann der Trennvorgang somit erfolgen, ohne dass das erste oder zweite Förderband durch die Trennmittel beeinflusst werden, was andernfalls zu einer Beschädigung und/oder dem Verschleiß der Förderbänder führen könnte. Die Größe des Spaltes zwischen den beiden Förderbändern wird entsprechend der einzusetzenden Trennmittel sowie der im Regelfall zu erwartenden Portionsgrößen und Fördergeschwindigkeiten der Förderbänder gewählt.

In einer bevorzugten Ausführungsform der vorliegenden Erfindung erfolgt in einem Verfahrensschritt ein Plätten der Portionen mittels eines Plättbandes.

Gemäß einer weiteren Ausführungsform der vorliegenden Erfindung erfolgt das Plätten der Portionen zwischen dem Plättband und dem zweiten Förderband, wenn die Portionen schon mit Verpackungsmaterial unterlegt sind. In dem das Plätten erst erfolgt, wenn die Portionen schon unterlegt sind, wird ein Anhaften der Portionen an das zweite Förderband, was im Hinblick auf weitere Verarbeitungsschritte nachteilig sein könnte, oder beim Entfernen der Portion von dem zweiten Förderband schlimmstenfalls zu einer Beschädigung der Portionen führen könnte, verhindert.

In einer Weiterbildung des erfindungsgemäßen Verfahrens wird das Trennen des Verpackungsmaterials von Sensormitteln ausgelöst, welche die Abschnitte zwischen zwei Portionen erkennen. Als Sensormittel werden berührungsfreie, insbesondere optische Sensoren, als besonders vorteilhaft angesehen, da von ihnen keine Beeinflussung der Lebensmittel vorgenommen wird. Durch die sensorgesteuerte Auslösung des Trennvorgangs ist es weiterhin nicht notwendig, eine mechanische Kopplung zwischen der Förderung des Verpackungsmaterials bzw. der Portionen und den Trennmitteln vorzusehen, was die Ausgestaltung einer Vorrichtung zum Ausführen des erfindungsgemäßen Verfahrens erheblich vereinfacht.

In einer weiteren Ausführungsform der vorliegenden Erfindung bedecken die Portionen nach ihrer Aufgabe auf das Verpackungsmaterial die Fläche des zugeordneten Verpackungsmaterials nicht vollständig. Die Größe des Verpackungsmaterials kann in dieser Ausführungsform vorab so definiert sein, dass zukünftige Formänderungen der Portionen, welche sich durch weitere Verarbeitungsschritte wie beispielsweise das Plätten von Portionen oder auch das Ausbacken von Teig ergeben, trotzdem nicht zu einem Übertreten der Portionen über das Verpackungsmaterial führen. Sollte beispielsweise ein Übertreten der Portionen über die Ränder des Verpackungsmaterials erwünscht sein, etwa wenn das Verpackungsmaterial in der Endverpackung zwischen den Einzelportionen nicht sichtbar werden soll, kann dies durch entsprechende Dimensionierung des Verpackungsmaterials relativ zu den Portionen und/oder umgekehrt berücksichtigt werden.

In einer bevorzugten Ausführungsform des erfindungsgemäßen Verfahrens verbleiben in Förderrichtung ein Abstand zwischen zwei benachbarten Portionen und senkrecht zur Förderrichtung ein Abstand zwischen dem Rand einer Portion und der Seitenkante des Verpackungsmaterials, welche durch eine oder mehrere der folgenden Einflussgrößen beeinflusst werden: Transportgeschwindigkeit des ersten Förderbandes, Transportgeschwindigkeit des zweiten Förderbandes, Transportgeschwindigkeit des Plättbandes, kleinste Abstand zwischen der Oberfläche des Plattbandes und dem zweiten Förderband, Breite des geförderten Verpackungsmaterials, und Position des Trennvorgangs zwischen zwei Portionen. Die Transportgeschwindigkeit des ersten Förderbandes beeinflusst den Abstand zwischen zwei benachbarten Portionen nach ihrer Aufgabe auf das erste Förderband. Die Transportgeschwindigkeit des zweiten Förderbandes beeinflusst den Abstand zwischen zwei benachbarten Portionen vor dem Plätt-vorgang. Die Transportgeschwindigkeit des Plättbandes beeinflusst die Form, welche die Portionen durch das Plätten annehmen. Eine Relativgeschwindigkeit zwischen dem Plättband und dem Förderband, zwischen dem die Portionen geplättet werden, führt während des Plättens zu einem Scheren der Portion, wodurch diese eine in Transportrichtung längliche Form annimmt. Je nachdem, ob die Transportgeschwindigkeit des Plättbandes größer oder geringer als die Geschwindigkeit des zweiten Förderbandes ist, werden die Portionen eher in Richtung einer vorderen Seitenkante oder in Richtung einer hinteren Seitenkante des mittlerweile zertrennten Verpackungsmaterials verformt. Auf diese Weise kann der endgültige Abstand und/oder Überstand zwischen der geplätteten Portion und dem Verpackungsmaterial beeinflusst werden. Der kleinste Abstand zwischen der Oberfläche des Plättbandes und dem zweiten Förderband hat entscheidenden Einfluss auf die Dicke des Lebensmittels nach dem Plätten. Je geringer der Abstand ist, desto weiter erstreckt sich die Portion nach dem Plätten in Transportrichtung und senkrecht zur Transportrichtung über dem Verpackungsmaterial. Durch die Breite des geförderten Verpackungsmaterials sowie durch die Portion des Trennvorgangs zwischen zwei Portionen wird festgelegt, wie groß die seitlichen Abstände zwischen der Portion und den seitlichen Rand des zertrennten Verpackungsmaterials vor dem Plätten sind. In einer vorteilhaften Weiterbildung des erfindungsgemäßen Verfahrens werden eine oder mehrere der Einflussgrößen manuell oder von einer Steuereinheit verändert, um den nach dem Plätten verbleibenden Abstand zwischen der geplätteten Portion und den Seitenkanten des getrennten Verpackungsmaterials einzustellen. Auf diese Weise ist eine größtmögliche Flexibilität des Verfahrens für verschiedene Lebensmittel und Anwendungsfälle gewährleistet.

Die vorliegende Erfindung löst die Aufgabe weiterhin durch eine Vorrichtung der eingangsgenannten Art, in dem die Mittel zur Förderung und zu Zufuhr des Verpackungsmaterials so angeordnet und ausgebildet sind, dass das Verpackungsmaterial in ungetrenntem Zustand dem Förderband zuführbar und den Portionen zuordenbar ist, und dass die Vorrichtung Trennmittel aufweist, die zur Ausführung eines Trennvorgangs zwischen zwei Portionen ausgebildet sind. Hinsichtlich der Wirkung und Vorteile wird auf die obigen Ausführungen Bezug genommen.

In einer vorteilhaften Ausführungsform der erfindungsgemäßen Vorrichtung weisen die Mittel zur Förderung und Zufuhr des Verpackungsmaterials eine Rolle zur Aufnahme und Abgabe eines Endlosbandes Verpackungsmaterial auf, welche dem ersten Förderband so zugeordnet ist, dass die Portionen von geförderten Verpackungsmaterial unterlegbar sind. Das Unterlegen der Portionen mit Verpackungsmaterial ist eine technisch einfache Möglichkeit, den Portionen Verpackungsmaterial zu zuordnen. Des Weiteren kann durch geeignete Auslegung hinsichtlich der Anordnung des ersten Förderbandes und des Verpackungsmaterials das Verpackungsmaterial direkt von dem ersten Förderband mitgezogen werden, so dass kein zusätzlicher Antrieb für die Entnahme des Verpackungsmaterials von der Rolle erforderlich ist. Im Hinblick auf eine Bauteilreduzierung der Vorrichtung ist dies von besonderem Vorteil.

Gemäß einer weiteren Ausführungsform der vorliegenden Erfindung weist die Vorrichtung ein zweites Förderband zum Abtransport der zugeordneten Portionen zur weiteren Verarbeitung auf. Vorteilhafter Weise ist das zweite Förderband so zum ersten Förderband beabstandet und angeordnet, dass die unterlegten Portionen vom ersten Förderband auf das zweite Förderband gelangen, ohne das dabei die Gefahr besteht, dass die Portionen zwischen die beiden Förderbänder gelangen. Dies wird in der Regel dadurch gewährleistet, dass das zweite Förderband im wesentlichen geringfügig unterhalb des ersten Förderbandes angeordnet ist.

In einer bevorzugten Ausführungsform der erfindungsgemäßen Vorrichtung sind die Trennmittel so zu dem ersten und zweiten Förderband angeordnet, dass die Trennung des Verpackungsmaterials zwischen dem ersten und zweiten Förderband erfolgt. Bei einer so gewählten Anordnung der Trennmittel ist gewährleistet, dass das Verpackungsmaterial durchtrennt werden kann, ohne dass die Trennmittel das erste oder zweite Förderband beschädigen. Eine besonders vorteilhafte Anordnung der Trennmittel ist demzufolge die Anordnung senkrecht oberhalb des Spaltes zwischen dem ersten und zweiten Förderband. Der Spalt zwischen den beiden Förderbändern ist hierbei so zu bemessen, dass die Trennmittel unter Berücksichtigung eines angemessen Bewegungsspiels weder das erste noch das zweite Förderband beim Durchführen des Trennvorgangs berühren.

In einer weiteren Ausführungsform der erfindungsgemäßen Vorrichtung weist die Vorrichtung ein Plättband auf, das zum Plätten von Portionen in der Vorrichtung angeordnet und ausgebildet ist. Es kann hierbei besonders vorteilhaft sein, dass Plättband mit einer Oberflächentextur zu versehen, durch welche ein Muster auf die Portion aufgeprägt wird. Das Plättband ist weiterhin aus einem Material auszuwählen, an dem ein möglichst geringer Anteil des geplätteten Lebensmittels haften bleibt.

In einer weiteren Ausführungsform der vorliegenden Erfindung wirkt das Plättband mit dem zweiten Förderband zusammen. Durch das vorgeschaltete Unterlegen der Portionen mit Verpackungsmaterial kann es zu keinem Anhaften zwischen den Portionen und den zweiten Förderband kommen, wodurch eine Verbesserung des Plättvorgangs und somit der Verarbeitungsgüte der erfindungsgemäßen Vorrichtung erreicht wird.

In einer vorteilhaften Ausführungsform der erfindungsgemäßen Vorrichtung weist die Vorrichtung Sensormittel auf, welche zur Erfassung des Abschnittes zwischen zwei benachbarten Portionen auf dem ersten Förderband ausgebildet sind. Der Abstand zwischen zwei benachbarten Portionen entspricht im Wesentlichen der Summe des Abstandes zwischen einer Portion zur ihrer vorderen Seitenkante und in dem Abstand der Portion zu der hinteren Seitenkante des ihr zugeordneten und zertrennten Verpackungsmaterials. Die genaue Position des Trennvorgangs innerhalb diese Abschnittes legt demzufolge fest, wie groß das Verhältnis dieser beiden Abstände zueinander ist, was wiederum Einfluss auf den Überstand und/oder Abstand zwischen der Portion und dem Verpackungsmaterial vor und/oder nach dem Plätt-Vorgang hat.

In einer weiteren Ausführungsform der erfindungsgemäßen Vorrichtung sind die Sensormittel zur Auslösung des Trennvorgangs der Trennmittel ausgebildet. Durch die gezielte Auswahl der Verzögerung, welche zwischen dem Erkennen eines Endes einer Portion und dem tatsächlichen Auslösen des Trennvorganges besteht, kann die exakte Position des Trennvorgangs und somit der Seitenkanten der zertrennten Teile des Verpackungsmaterials bestimmt werden. Eine kurze Verzögerung bewirkt einen geringeren Abstand zwischen der Portion und einer hinteren Seitenkante des Verpackungsmaterials, eine längere Verzögerung bewirkt demzufolge die Verlängerung des Abstandes zwischen der Portion und der hinteren Seitenkante mit einer einhergehenden Verkürzung des Abstandes zwischen der Portion und der vorderen Seitenkante des zertrennten Verpackungsmaterials.

Gemäß einer Weiterbildung der erfindungsgemäßen Vorrichtung sind eine oder mehrere der Einflussgrößen mittels einer Steuereinheit einstell- und/oder regelbar: Transportgeschwindigkeit des ersten Förderbandes, Transportgeschwindigkeit des zweiten Förderbandes, Transportgeschwindigkeit des Plättbandes, kleinster Abstand zwischen der Oberfläche des Plättbandes und dem zweiten Förderband, Breite des geförderten Verpackungsmaterials, und Position des Trennvorgangs zwischen zwei Portionen. Eine solche Steuereinheit umfasst neben der notwendigen Elektronik vorzugsweise Bedienelemente, welche so angeordnet sind, dass der Anwender der Vorrichtung die vorstehend genannten Parameter einzeln beeinflussen kann, oder aber vorprogrammierte Parameterkombinationen auszuwählen, welche für bestimmte Anwendungsfälle in der Steuereinheit hinterlegt sind.

Gemäß einer vorteilhaften Ausführungsform der vorliegenden Erfindung weist die Vorrichtung weiterhin eine Aufnahmeleitung zum Anschluss einer Füllmaschine auf, durch welche aus der Füllmaschine zugeführte Lebensmittel zu einer Formdüse zum Formen der Portionen gefördert werden können. Durch die entsprechende Ausgestaltung de Formdüse wird die Roh-Form der von der Vorrichtung zu verarbeitenden Portionen entscheidend beeinflusst. Zum Herstellen von Patties für Hamburger hat sich ein im Wesentlichen zylindrischer Öffnungsquerschnitt der Formdüse als vorteilhaft erwiesen. Für andere Anwendungsfälle sind aber auch andere Öffnungsquerschnitte denkbar.

Gemäß einer weiteren Ausführungsform weist die Vorrichtung der vorliegenden Erfindung zweite, stromaufwärts von dem Förderband angeordnete Trennmittel zur Trennung der jeweiligen Portionen von Lebensmitteln auf. Die zweiten Trennmittel sind vorzugsweise an einem Ende der Aufnahmeleitung angeordnet, und über die Funktion aus, die kontinuierlich durch die Aufnahmeleitung zugeführte Masse des Lebensmittels in einzelne Portionen zu unterteilen. Auf technisch einfache Art und Weise wird dies ebenfalls durch ein Trennmesser umgesetzt.

In einer weiteren Ausführungsform in der erfindungsgemäßen Vorrichtung weist diese einen benachbart zur Formdüse angeordneten Stützring zur Führung der abgetrennten Portionen in Richtung zu dem auf dem ersten Förderband angeordneten Verpackungsmaterial auf. Die Querschnittsöffnung des Stützringes entspricht vorzugsweise im Wesentlichen der Form des Öffnungsquerschnittes der Formdüse. Der Stützring dient dem Zweck, die abgetrennten Portionen zumindest über eine kurze Strecke hinweg zu führen, damit eine gleichmäßige und zuverlässige Aufgabe der Portion auf das erste Förderband erfolgen kann.

Die erfindungsgemäße Vorrichtung und das erfindungsgemäße Verfahren zeigen sich in vorteilhafter Weise in einem System zur Verarbeitung von Lebensmitteln, insbesondere von Hackfleisch, bestehend aus einer Füllmaschine und einer Vorrichtung einem der Ansprüche 12 bis 24, insbesondere ausgebildet zur Durchführung eines Verfahrens gemäß einem der Ansprüche 1 bis 11.

Im Folgenden wird die Erfindung anhand beispielhafter Ausführungsformen unter Bezugnahme auf die beiliegenden Figuren näher beschrieben. Es zeigen:
- Fig. 1: eine schematische Darstellung einer Seitenansicht eines erfindungsgemäßen Systems 30 zur Verarbeitung von Lebensmitteln.
- Fig. 2: eine schematische Darstellung einer Portion 6 in Draufsicht, und
- Fig. 3: eine schematische Darstellung einer Portion 13 in Draufsicht.

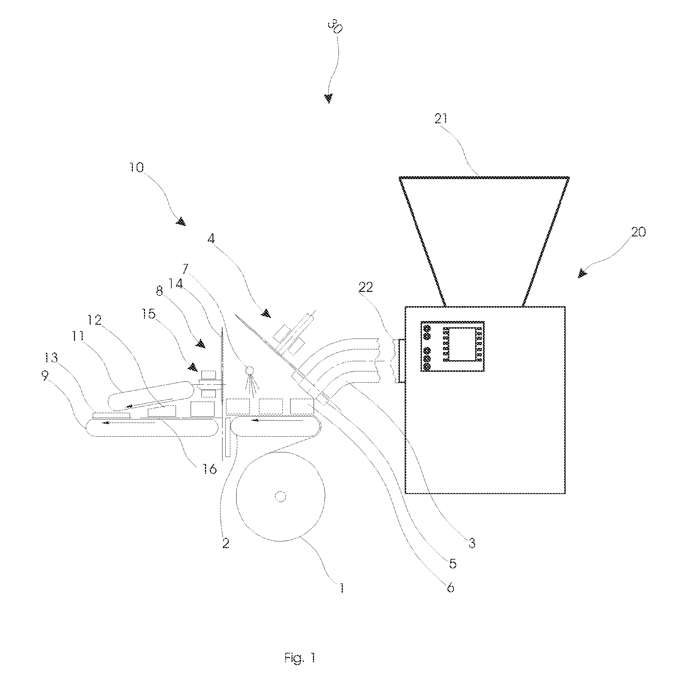

Das in Figur 1 dargestellte System 30 zur Verarbeitung von Lebensmitteln umfasst eine Vorrichtung 10, an die eine an sich bekannte Füllmaschine 20 angeschlossen ist.

Von einer Endlosrolle 1 wird Verpackungsmaterial einem ersten Förderband 2 zugeführt und von diesem gefördert. Der innerhalb des ersten Förderbandes 2 dargestellte Pfeil zeigt die Umlaufrichtung des ersten Förderbandes 2 während des normalen Betriebs an. Dem ersten Förderband 2 wird ein in Portionen 6 abgeteiltes Lebensmittel zugeführt, welches von einem Einfülltrichter 21 der Füllmaschine 20 durch eine Aufnahmeleitung 22 einer Formdüse 3 zugeführt wird. An einem Ende der Formdüse 3 sind Trennmittel 4 mit einem Trennmesser angeordnet, welche von der in der Formdüse 3 befindlichen Lebensmittel-Masse einzelne Portionen 6 abteilen. Diese abgeteilten Portionen 6 werden auf das Verpackungsmaterial, welches sich auf dem ersten Förderband 2 befindet, aufgegeben. Die Portionen 6 weisen einen Abstand zu einer jeweils benachbarten Portion 6 auf, und werden in angezeigter Förderrichtung auf dem ersten Förderband 2 gefördert. In der dargestellten Ausführungsform oberhalb des ersten Förderbandes 2 sind Sensormittel 7 angeordnet, welche die Abschnitte zwischen zwei benachbarten Portionen 6 erkennen. Ausgelöst durch die Sensormittel 7 führen Trennmittel 8 eine Zerteilung des Verpackungsmaterials zwischen dem ersten und einem zweiten Förderband 9 durch.

Die in Figur 1 dargestellte Ausführungsform der vorliegenden Erfindung weist ein mit einem Drehantrieb 15 verbundenes Trennmesser 14 auf. Das Trennmesser 14 schneidet in einer drehenden Abwärtsbewegung das Verpackungsmaterials durch und kehrt im Anschluss an die Trennbewegung in seine Ausgangsposition zurück, in welcher es verharrt, bis ein nächster Trennvorgang auszuführen ist.

Durch den Trennvorgang wird den Portionen 6 ein Abschnitt 16 zertrennten Verpackungsmaterials zugewiesen. Zusammen mit dem zugeordneten Verpackungsmaterial 16 werden die Portionen 6 dem zweiten Förderband 9 zugeführt.

Von dem zweiten Förderband 9 werden die Portionen 6 mit den zugeordneten Verpackungsmaterial 16 zu einem Plättband 11 geführt. In der dargestellten Ausführungsform ist das Plättband zur besseren Führung der Portion 6 in einem Winkel angeordnet, der in Förderrichtung des zweiten Förderbandes 9 und in Förderrichtung des Plättbandes 11 spitz zuläuft und an einem in Förderrichtung des zweiten Förderbandes 9 gesehen hinteren Ende des Plättbandes 11 einen kleinsten Abstand zwischen dem Plättband 11 und dem zweiten Förderband 9 aufweist. In Figur 1 ist weiterhin eine Portion 12 dargestellt, welche teilweise geplättet ist. Es ist außerdem eine Portion 13 dargestellt, welche im Wesentlichen vollständig geplättet ist. Das Volumen der Portionen 12 und 13 entspricht dem Volumen der Portion 6, die Oberfläche des von der Portion 13 bedeckten Verpackungsmaterials ist allerdings beträchtlich größer als die Oberfläche, die von der Portion 6 verdeckt wird.

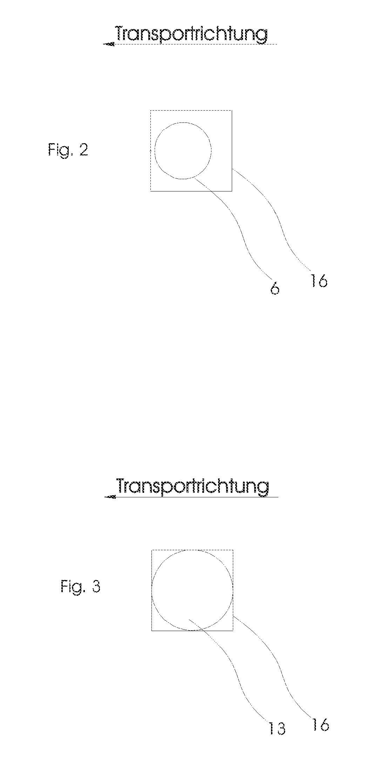

Das Bedecken der Oberfläche des Verpackungsmaterials durch die Portionen 6 bzw. 13 ist schematisch in den Figuren 2 und 3 dargestellt. Figur 2 zeigt eine Portion 6, welche auf einem Abschnitt 16 des Verpackungsmaterials angeordnet ist, und jeweils zu den Seitenkanten des Abschnittes 16 Abstände aufweist. In der dargestellten Ausführungsform ist die Portion 6 in Transportrichtung mittig auf dem Abschnitt 16 des zerteilten Verpackungsmaterials angeordnet. Die Abstände, welche die Portion 6 zu der vorderen und hinteren Seitenkante des Abschnittes 16 des Verpackungsmaterials aufweist, sind nicht gleich. Der Abstand zur in Transportrichtung gelegenen Seitenkante ist geringer als der Abstand der entgegen der Transportrichtung gelegenen Seitenkante. Das Verhältnis dieser Abstände zueinander kann durch eine geeignet gewählte Verzögerung zwischen dem Erkennen des Abschnittes zwischen zwei Portionen 6 durch die Sensormittel 7 und dem Auslösen des Trennvorganges durch die Trennmittel 8 so beeinflusst werden, dass sich nach dem Durchführen des Plätt-Vorgangs der in Figur 3 dargestellte Zustand ergibt. In Figur 3 ist eine geplättete Portion 13 dargestellt, die auf dem Abschnitt 16 des Verpackungsmaterials angeordnet ist. Durch den Plättvorgang ist die Portion 6 auf eine niedrigere Höhe reduziert worden, hat sich allerdings zu allen Seiten hin ausgebreitet. Durch eine geeignete Einstellung der Abstände der Portionen 6 zu den Seitenkanten des Abschnitts 16 des Verpackungsmaterials, des kleinsten Abstandes zwischen dem Plättband 11 und dem zweiten Förderband 9 sowie der Geschwindigkeiten des zweiten Förderbandes 9 und des Plättbandes 11 weist die geplättete Portion im Wesentlichen keinen Abstand mehr zu den Seitenkanten des Abschnitts 16 des Verpackungsmaterials auf.

## Patentansprüche

1. Verfahren zum Zuordnen von Verpackungsmaterial, insbesondere Papier, zu portionierten Lebensmitteln mit den Schritten:
Zufuhr von Portionen (6) eines Lebensmittels auf ein erstes Förderband (2),
Zufuhr und Zuordnung von Verpackungsmaterial zu den Portionen (6),
**dadurch gekennzeichnet, dass** das Verpackungsmaterial ohne vorheriges Trennen dem ersten Förderband (2) zugeführt und den Portionen (6) zugeordnet wird, und
dass das Verpackungsmaterial anschließend zwischen zwei Portionen (6) getrennt wird.

2. Verfahren nach Anspruch 1,
**gekennzeichnet durch** Unterlegen der Portionen (6) mit Verpackungsmaterial, insbesondere Papier, welches als ein Endlosband von einer Rolle (1) aufgenommen und gefördert wird und welches mittels Trennmitteln (8) durchtrennt wird.

3. Verfahren nach Anspruch 1 oder 2,
**gekennzeichnet durch** Abtransport der unterlegten Portionen (6) mittels eines zweiten Förderbandes (2) zur weiteren Verarbeitung.

4. Verfahren nach Anspruch 1, 2 oder 3,
**dadurch gekennzeichnet dass** die Portionen (6) auf das von dem ersten Förderband (2) geförderte Verpackungsmaterial aufgegeben werden.

5. Verfahren nach mindestens einem der vorstehenden Ansprüche,
**dadurch gekennzeichnet, dass** das Trennen durch Trennmittel (8) an einem Übergangs-Abschnitt zwischen dem ersten und einem zweiten Förderband (9) erfolgt.

6. Verfahren nach mindestens einem der vorstehenden Ansprüche,
**gekennzeichnet durch** Plätten der Portionen (6) mittels eines Plättbandes (11),

7. Verfahren nach Anspruch 6,
**dadurch gekennzeichnet, dass** das Plätten der Portionen (6) zwischen dem Plättband (11) und dem zweiten Förderband (9) erfolgt, wenn diese schon mit Verpackungsmaterial unterlegt sind.

8. Verfahren nach einem der vorstehenden Ansprüche,
**dadurch gekennzeichnet, dass** das Trennen des Verpackungsmaterials von Sensormitteln (7) ausgelöst wird, welche die Abschnitte zwischen zwei Portionen (6) erkennen.

9. Verfahren nach einem der vorstehenden Ansprüche,
**dadurch gekennzeichnet, dass** die Portionen (6) nach ihrer Aufgabe auf das Verpackungsmaterial die Fläche des zugeordneten Verpackungsmaterials nicht vollständig bedecken.

10. Verfahren nach Anspruch 9,
**dadurch gekennzeichnet, dass** in Förderrichtung ein Abstand zwischen zwei benachbarten Portionen (6) und senkrecht zur Förderrichtung ein Abstand zwischen dem Rand einer Portion (6) und der Seitenkante des Verpackungsmaterials verbleibt, welche durch eine oder mehrere der folgenden Einflussgrößen beeinflusst wird:
Transportgeschwindigkeit des ersten Förderbandes (2),
Portioniergeschwindigkeit bei Herstellung der Portionen (6),
kleinster Abstand zwischen der Oberfläche des Plättbandes (11) und dem zweiten Förderband (9),
Breite des geförderten Verpackungsmaterials, und
Position des Trennvorgangs zwischen zwei Portionen (6).

11. Verfahren nach Anspruch 10,
**dadurch gekennzeichnet, dass** eine oder mehrere der Einflussgrößen manuell oder von einer Steuereinheit verändert werden, um den nach dem Plätten verbleibenden Abstand zwischen der geplätteten Portion (13) und den Seitenkanten des getrennten Verpackungsmaterials einzustellen.

12. Vorrichtung zum Zuordnen von Verpackungsmaterial, insbesondere Papier zu portionierten Lebensmitteln,
mit einem Förderband zur Aufnahme und Förderung von Portionen (6) eines Lebensmittels und
Mitteln zur Förderung und Zuordnung von Verpackungsmaterial zu den Portionen (6),
**dadurch gekennzeichnet, dass** die Mittel zur Förderung und Zufuhr des Verpackungsmaterials so angeordnet und ausgebildet sind, dass das Verpackungsmaterial in ungetrenntem Zustand dem Förderband (2) zuführbar und den Portionen (6) zuordenbar ist
und dass die Vorrichtung Trennmittel (8) aufweist, die zur Ausführung eines Trennvorganges zwischen zwei Portionen (6) ausgebildet sind.

13. Vorrichtung nach Anspruch 12,
**dadurch gekennzeichnet, dass** die Mittel zu Förderung und Zufuhr des Verpackungsmaterials eine Rolle (1) zur Aufnahme und Abgabe eines Endlosbandes Verpackungsmaterial aufweisen, welche dem ersten Förderband (2) so zugeordnet ist, dass die Portionen (6) von gefördertem Verpackungsmaterial unterlegbar sind.

14. Vorrichtung nach Anspruch 12 oder 13,
**gekennzeichnet durch** ein zweites Förderband (9) zum Abtransport der zugeordneten Portionen (6) zur weiteren Verarbeitung.

15. Vorrichtung nach einem der Ansprüche 12 bis 14,
**dadurch gekennzeichnet, dass** die Trennmittel (8) so zu dem ersten und zweiten Förderband (9) angeordnet sind, dass die Trennung des Verpackungsmaterials zwischen dem ersten und zweiten Förderband (9) erfolgt.

16. Vorrichtung nach einem der Ansprüche 12 bis 15,
**dadurch gekennzeichnet, dass** die Vorrichtung ein Plättband (11) aufweist, das zum Plätten von Portionen (6) in der Vorrichtung angeordnet und ausgebildet ist.

17. Vorrichtung nach Anspruch 16,
**dadurch gekennzeichnet, dass** das Plättband (11) mit dem zweiten Förderband (9) zusammenwirkt.

18. Vorrichtung nach einem der Ansprüche 12 bis 17,
**dadurch gekennzeichnet, dass** die Vorrichtung Sensormittel (7) aufweist, welche zur Erfassung des Abschnittes zwischen zwei benachbarten Portionen (6) auf dem ersten Förderband (2) ausgebildet ist.

19. Vorrichtung nach Anspruch 18,
**dadurch gekennzeichnet, dass** die Sensormittel (7) zur Auslösung des Trennvorgangs der Trennmittel (8) ausgebildet sind.

20. Vorrichtung nach einem der Ansprüche 12 bis 19,
**dadurch gekennzeichnet, dass** eine oder mehrere der Einflussgrößen mittels eine Steuereinheit einstell- und/oder regelbar sind:
Transportgeschwindigkeit des ersten Förderbandes (2),
Transportgeschwindigkeit des zweiten Förderbandes (9),
Transportgeschwindigkeit des Plättbandes (11),
kleinster Abstand zwischen der Oberfläche des Plättbandes (11) und dem zweiten Förderband (9),
Länge des geförderten Verpackungsmaterials und
Position des Trennvorgangs zwischen zwei Portionen (6)

21. Vorrichtung nach einem der Ansprüche 12 bis 20,
**gekennzeichnet durch** eine Aufnahmeleitung (22) zum Anschluss einer Füllmaschine, **durch** welche aus der Füllmaschine (20) zugeführte Lebensmittel zu einer Formdüse (3) zum Formen der Portionen (6) gefördert werden können.

22. Vorrichtung nach Anspruch 21,
**gekennzeichnet durch** zweites stromaufwärts von dem Förderband angeordnetes Trennmittel (4) zur Trennung der jeweiligen Portionen (6) von Lebensmitteln.

23. Vorrichtung nach Anspruch 22,
**gekennzeichnet durch** einen benachbart zur Formdüse (3) angeordneten Stützring (5) zur Führung der abgetrennten Portion (6) in Richtung zu dem auf dem ersten Förderband (2) angeordneten Verpackungsmaterial

24. System zur Verarbeitung von Lebensmitteln, insbesondere von Hackfleisch oder Teigwaren, bestehend aus einer Füllmaschine (20) und einer Vorrichtung nach einem der Ansprüche 12 bis 24, insbesondere ausgebildet zur Durchführung eines Verfahrens gemäß einem der Ansprüche 1 bis 11.
